# EUROPEAN PATENT SPECIFICATION

(11) **EP 0 622 017 B1**
(45) Date of publication and mention of the grant of the patent: **22.10.1997**
(21) Application number: 94830202.1
(22) Date of filing: 28.04.1994
(51) Int. Cl.: A01K 1/015, A01K 1/01

(54) **A drainage pipe section, in particular for pigsty floors**
Ein Dränagerohr-Querschnitt, insbesondere für Böden von Schweineställen
Une section de tuyau de drainage, en particulier pour des sols des porcheries

(30) Priority: 29.04.1993 IT MO930059
(43) Date of publication of application: 02.11.1994
(73) Proprietor: Lusetti, Sergio, I-41013 Castelfranco Emilia(Modena) (IT)
(72) Inventor: Lusetti, Sergio, I-41013 Castelfranco Emilia(Modena) (IT)
(74) Representative: Lanzoni, Luciano

(56) References cited:
- DE-A- 2 620 398
- US-A- 4 346 670
- US-A- 4 594 205

## Description

Known-type pigsties have gridded or slotted floors to catch and collect animal excrement and effluvia in underlying channels or containers so that it can be disposed of.

A flooring having the features as set forth in preamble portion of claim 1 is known for example from US-A 4,346,670.

Also known are floors comprising a plurality of modular elements (concrete beams) laid side-by-side and arranged on a same plane. The beams exhibit double-T-shaped straight transversal sections, which when laid side-by-side give rise to the said channels with an underlying collection channel. The channels are lined with a waterproof substance, generally plastic sections open on an upper side.

A functional problem connected with such known floors is the impossibility of guaranteeing perfect adhesion of the plastic sections to the sides of the concrete channels, which can easily lead to infiltration of excreta between the channels and the plastic sections, often inaccessible to normal cleaning operation methods.

A further problem of the above art is its high cost.

The present invention aims to obviate the above drawbacks by providing a flooring having the features as set forth in the characterising portion of claim 1.

An advantage of the invention is that is it simple and fast to install, even in large sties. Further, the channel sections are light and easy to transport.

A still further advantage is constituted by the resultant increase in workspeed.

Further characteristics and advantages of the present invention will better emerge from the detailed description that follows, of an embodiment of the invention, illustrated in the form of a non-limiting example in the accompanying drawings, in which:

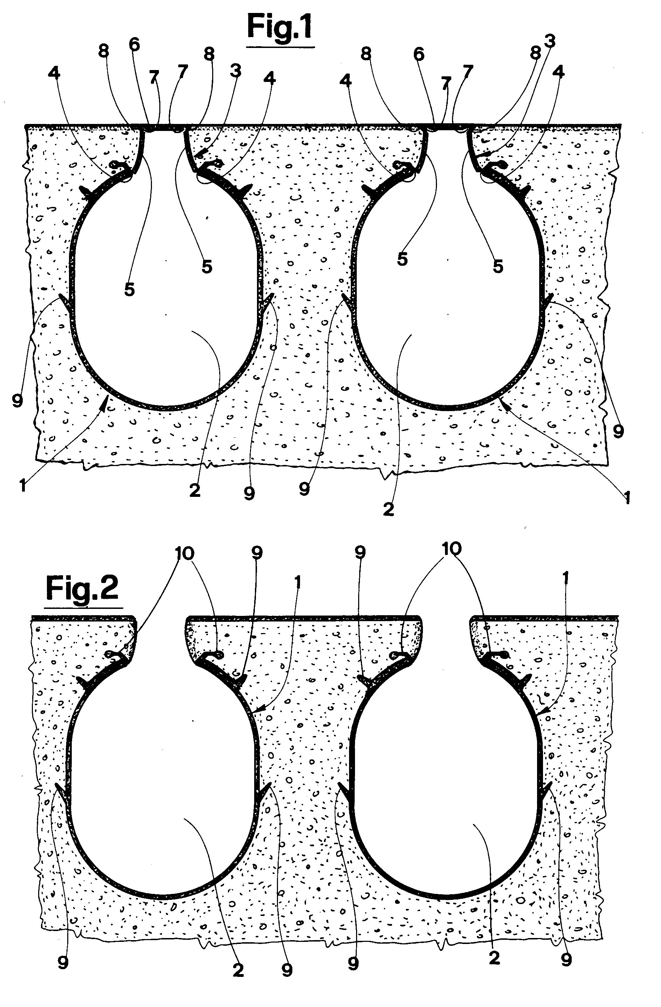

- figure 1 shows a schematic transversal section of a tract of floor realised using the invention;
- figure 2 shows the tract of floor of figure 1 after the detachable neck section of the sections has been removed, giving rise to the final configuration of the sty floor.

The floor illustrated comprises a plurality of tubular sections, laid side-by side and set in a mass of concrete (though other materials could be used instead of concrete).

Each tubular section comprises a first portion 1 affording a large internal cavity 2.

A second portion 3 superiorly closes the internal cavity 2. The second portion 3 laterally exhibits two pre-weakened longitudinal recesses 4, whereat the section is of a reduced thickness. The second portion 3 is easily pressure-detachable from the first portion 1 along the longitudinal recesses 4.

The second portion 3 comprises two facing lateral wall tracts 5 which are symmetrical according to a medial vertical plane, and which project externalwise of the section.

The lateral wall tracts 5 are surmounted by and connected to a flat horizontal external surface 6, which is narrow and longitudinal, like the sections themselves.

The distance between the lateral wall tracts 5 increases from the neck portion in a downwards direction from the external surface 6.

Two further pre-weakened longitudinal recesses 7 are arranged at the sides of the external surface 6 sides, at an attachment zone of the external surface 6 with the second portion 3.

The external surface 6 exhibits, at its lateral edges, two lateral projections 8 projecting externalwise and connected to the lateral wall tracts 5, such as to identify two concave connections with the external surface of the lateral wall tracts 5.

A plurality of anchoring fins 9 and 10 project externalwise of the first portion 1 of the pipe section. 10 denotes the upwardly-projecting anchoring fins arranged at the upper edges of the first portion 1 of the pipe section.

The first portion 1 of the pipe section superiorly comprises two thickened wall tracts arranged symmetrically in relation to a vertical median plane.

The floor laying will comprise a bottom layer of gravel and cement of a predetermined inclination, above which concrete is generally poured to improve the isolation of the floor.

The pipe sections are laid on the bottom layer. An isosceles trapezoid clamp (with a top end open) is positioned between one pipe section and a next and spaces one section from another and maintains the sections in a correct position during concrete filling operations. The clamps externally exhibit hooks which engage with the anchoring fins 9, contrasting the hydrostatic pressure of the concrete, which would make the pipes float upwards. The clamps are anchored to the bottom layer by tracts of rapid-dry concrete.

The pipe sections are located such that the flat external surfaces 6 of each section are coplanar, as well as being arranged on the same plane as the floor surface. The pipe sections follow the inclination of the bottom layer on which they rest, such as to provide the necessary inclination for an easy evacuation of the waste from the drainage channels.

Once the pipe sections are in place, the covering layer of concrete is laid, fills the spaces between one pipe section and another and is brought up to the level of the external surfaces 6.

The presence of pipe sections constitutes an advantage for a correct laying of the concrete, as they provide reference lines for the finished inclined surface and obviate the need for line markers and the like.

A top layer of specially treated concrete (for example quartz-treated) is spread over the underlying concrete mix so as to guarantee further the at least near-total impermeability of the finished floor.

The top layer of the floor could be made using Florentine cotto-type tiles: obviously in this case the space between the pipes would not be totally filled, but tiles of a predetermined size would be used for this purpose.

When the concrete has set the second portion 3 is detached. This could be simply done by an operative's tearing and pulling the second portion 3 away from the rest of the pipe sections, exploiting the pre-weakened longitudinal recesses 7. Once this operation has been completed, the floor is left exhibiting longitudinal slots through which excreta can be drained away, first down into the channels and then out of the sty.

The slots have rounded edges thanks to the special conformation of the lateral projections 8, so that an animal cannot accidentally cause harm to itself.

The lateral wall tracts 5 are also removed by hand: their removal is necessary in order that there should not be spaces between them and the lateral wall tracts 5 which might retain quantities of waste material.

The internal cavities 2 of a single section constitute a constant-section drainage channel that is superiorly open so as to afford a longitudinal groove at floor level. The anchoring fins 10, by now embedded in the concrete of the floor, are upwardly turned so as to prevent any infiltration of excreta between the pipe section and the concrete.

The sections are advantageously made in a plastic material such as PVC, which renders them very light, as well as economical and corrosion-resistent and smooth so that the waste materials can be easily removed through the drainage channel.

## Claims

1. A drainage pipe section, in particular for pigsty floors, comprising a first portion (1) affording a large internal cavity (2) superiorly closed by a second portion (3) which is detachable and provided with pre-weakened longitudinal recesses (4); the second portion (3) superiorly comprising at least one flat external surface (6) destined to be located on a same level as that of the pigsty floor,
characterised in that said second portion (3) comprises two further pre-weakened longitudinal recesses (7) arranged at the sides of the external surface (6), at an attachment zone of said external surface with said second portion.

2. A drainage pipe section as in claim 1, characterised in that the second portion (3) comprises two tracts of symmetrical and facing lateral wall (5); a distance between the lateral wall tracts (5) increasing gradually from the external surface (6) downwards.

3. A drainage pipe section as in claim 2, characterised in that the second portion (3) comprises two projections (8) arranged laterally to edges of the external surface (6) and constituting concave connection tracts with an external surface of the lateral wall tracts (5).

4. A drainage pipe section as in claim 1 characterised in that the first portion (1) comprises a plurality of anchoring fins (9), (10), projecting externalwise from said first portion (1).

5. A drainage pipe section as in claim 4, characterised in that it comprises at least two anchoring fins (10) arranged superiorly at edges of the first portion (1) and turned in an upwards direction.

## Patentansprüche

1. Dränagerohr-Querschnitt, insbesondere für Böden von Schweineställen, bestehend aus einem ersten Teil (1), der einen großen inneren Hohlraum (2) aufweist, welcher oberhalb durch einen zweiten Teil (3) geschlossen ist, der abnehmbar und mit Sollschwächungslängsausnehmungen (4) versehen ist; wobei der zweite Teil (3) oberhalb wenigstens eine flache aüßere Fläche (6) aufweist, die dazu vorgesehen ist, auf einem gleichen Niveau angeordnet zu sein wie das des Schweinestallbodens, dadurch gekennzeichnet, daß der besagte zweite Teil (3) zwei weitere Sollschwächungslängsausnehmungen (7) enthält, die an den Seiten der äußeren Fläche (6) angeordnet sind, in einem Anschlußbereich der besagten äußeren Fläche mit dem besagten zweiten Teil.

2. Dränagerohr-Querschnitt nach Patentanspruch 1, dadurch gekennzeichnet, daß der zweite Teil (3) zwei seitliche, symmetrisch gegenüberliegende Wandabschnitte (5) enthält, mit einem Abstand zwischen den seitlichen Wandabschnitten (5), der sich progressiv von der äußeren Fläche (6) ausgehend nach unten vergrößert.

3. Dränagerohr-Querschnitt nach Patentanspruch 2, dadurch gekennzeichnet, daß der zweite Teil (3) zwei Vorsprünge (8) aufweist, die seitlich zu den Kanten der äußeren Fläche (6) angeordnet sind und konkave Verbindungsabschnitte mit einer äußeren Fläche der seitlichen Wandabschnitte (5) bilden.

4. Dränagerohr-Querschnitt nach Patentanspruch 1, dadurch gekennzeichnet, daß der erste Teil (1) eine Mehrzahl von Verankerungsflügeln (9), (10) enthält, die von dem besagten ersten Teil (1) nach außen vorspringen.

5. Dränagerohr-Querschnitt, nach Patentanspruch 4, dadurch gekennzeichnet, daß er wenigstens zwei Verankerungsflügel (10) enthält, die oberhalb an den Kanten des ersten Teils (1) angeordnet sind und in eine nach oben zeigende Richtung gerichtet sind.

## Revendications

1. Une section de tuyau de drainage, en particulier pour des sols de porcheries, comprenant une première portion (1) présentant une ample cavité interne (2) fermée supérieurement par une seconde portion (3) détachable et pourvue d'entailles longitudinales (4) prédisposées pour faciliter ce détachement; la seconde portion (3) supérieure comprend au moins une surface plane externe (6) destinée à être placée au même niveau que celui du sol de la porcherie,
caractérisée en ce que ladite seconde portion (3) comprend deux autres entailles longitudinales (7), prédisposées à faciliter le détachement, disposées sur les côtés de la surface plane externe (6), dans une zone d'attachement de ladite surface externe avec ladite seconde portion.

2. Une section de tuyau de drainage selon la revendication 1, caractérisée en ce que la seconde portion (3) comprend deux sections de parois latérales (5) qui se font symétriquement face; la distance entre les sections de parois latérales (5) augmentant progressivement, de la surface externe (6) en allant vers le bas.

3. Une section de tuyau de drainage selon la revendication 2, caractérisée en ce que la seconde portion (3) comprend deux saillies (8) placées latéralement aux bords de la surface externe (6) et constituant des sections de raccord concaves avec la surface externe des sections de parois latérales (5).

4. Une section de tuyau de drainage selon la revendication 1, caractérisée en ce que la première portion (1) comprend une pluralité d'ailettes d'ancrage (9), (10), faisant extérieurement saillie sur ladite première portion (1).

5. Une section de tuyau de drainage selon la revendication 4, caractérisée en ce qu'elle comprend au moins deux ailettes d'ancrage (10) disposées supérieurement aux bords de la première portion (1) et dirigées vers le haut.
